# FASCICULE DE BREVET EUROPEEN

(11) **EP 1 531 986 B1**
(45) Date de publication et mention de la délivrance du brevet: **14.12.2016**
(21) Numéro de dépôt: 03757103.1
(22) Date de dépôt: 04.06.2003
(51) Int. Cl.: B32B 17/10, B60J 1/02, B60R 21/34, C03B 27/04, C03C 23/00, C03C 17/00

(54) **VITRE FEUILLETEE AVEC ZONE DE MOINDRE RESISTANCE**
VERBUNDGLASSCHEIBE MIT SCHWÄCHUNGSZONE
LAMINATED GLASS WITH EMBRITTLED ZONE

(30) Priorité: 10.06.2002 DE 10225555
(43) Date de publication de la demande: 25.05.2005
(73) Titulaire: SAINT-GOBAIN GLASS FRANCE, 92400 Courbevoie (FR)
(72) Inventeur: KRÄMLING, Franz, 52072 Aachen (DE); LINNHÖFER, Dieter, 52222 Stolberg (DE)
(74) Mandataire: Saint-Gobain Recherche
(86) Numéro de dépôt international: PCT/FR2003/001673
(87) Numéro de publication internationale: WO 2003/103952

(56) Documents cités:
- EP-A- 0 560 639
- FR-A- 1 090 235
- FR-A- 1 425 292
- FR-A- 2 160 877
- FR-A- 2 395 163
- GB-A- 2 019 777
- US-A- 3 592 726
- US-A- 3 822 122
- US-A- 5 189 952

## Description

L'invention concerne une vitre feuilletée avec des zones de moindre résistance, destinée à fermer une ouverture de véhicule, suivant le préambule de la revendication 1. L'invention concerne également l'utilisation d'une vitre feuilletée conforme à l'invention dans un véhicule.

Les vitres feuilletées sont utilisées sous de nombreuses formes dans des véhicules et des bâtiments, principalement comme fenêtres. L'avantage particulier des vitres feuilletées réside dans le fait qu'elle combinent des propriétés de sécurité avec une haute résistance à la rupture. Les propriétés de sécurité sont basées sur le fait que, en cas de bris des vitres feuilletées, les vitres individuelles brisées sont maintenues à l'aide de la couche intermédiaire indéchirable qui assemble les vitres. Par ailleurs, la vitre feuilletée ne présente pas d'arêtes vives. La résistance à la rupture de vitres feuilletées est en l'occurrence sensiblement plus élevée que celle de vitres individuelles de même épaisseur ou d'une vitre individuelle trempée. Les vitres trempées ont en outre encore l'inconvénient qu'elles sont sensibles aux dommages d'arêtes et de surface et qu'elles peuvent se briser lorsque de tels dommages se produisent. Un autre avantage des vitres feuilletées est qu'elles peuvent être équipées d'éléments fonctionnels supplémentaires, qui sont disposés sous protection à l'intérieur de la vitre feuilletée. En d'autres termes, les éléments fonctionnels, par exemple des couches minces transparentes ou des conducteurs électriques, sont disposés soit dans ou sur les couches intermédiaires, soit sur une face intérieure de la vitre.

Les avantages précités concernant la résistance à la rupture des vitres feuilletées peuvent devenir des inconvénients lorsqu'il faut, en cas d'urgence, quitter ou entrer dans un espace séparé par une telle vitre. Les vitres feuilletées ne peuvent être découpées qu'avec des outils spéciaux.

Pour résoudre ce problème, on a mis au point des vitres feuilletées avec des zones de moindre résistance, qui peuvent servir de système de sortie ou d'entrée de secours. Des vitres de sécurité feuilletées avec un système de sortie de secours sont connues par exemple par les documents DE 44 28 690 A1 et US 5 350 613. De telles vitres de sécurité feuilletées se composent d'au moins deux vitres rigides avec une couche intermédiaire polymère, dans laquelle une zone de moindre résistance étant incorporée dans la couche intermédiaire. La zone de moindre résistance décrite dans DE 44 28 690 A1 est représentée par un affaiblissement local de la couche polymère intermédiaire. Cet effet est obtenu par une diminution de l'adhérence de la couche sur le verre ou entre des feuilles différentes de la couche entre elles.

Le brevet allemand DE 100 45 006 C1 décrit une vitre de sécurité feuilletée en verre avec une zone de moindre résistance, qui comprend des vitres de verre trempées et une couche intermédiaire polymère, qui est interrompue en au moins un endroit. En l'occurrence, la couche intermédiaire polymère se compose de deux plastiques transparents ayant une résistance à la déchirure différente, un allongement à la déchirure différent et une résistance à la propagation de la déchirure différente. La vitre de sécurité feuilletée comprend dans la zone de moindre résistance le plastique avec la plus faible résistance à la déchirure, le plus faible allongement à la déchirure et la plus faible résistance à la propagation de la déchirure, et dans la zone qui ne représente pas la zone de moindre résistance, le plastique avec la plus grande résistance à la déchirure, le plus grand allongement à la déchirure et la plus grande résistance à la propagation de la déchirure. En outre, il y a dans la vitre feuilletée en verre des endroits sans couche intermédiaire polymère, sur lesquels il est prévu des grains d'une matière dont la dureté est supérieure à celle du verre utilisé. Ces grains sont censés pénétrer en cas d'urgence dans la surface de la vitre de verre trempée et briser celle-ci.

Lorsqu'une vitre feuilletée est utilisée dans un véhicule comme pare-brise ou comme vitre de toit, sa résistance à la rupture peut constituer un inconvénient si, en cas d'accident, un piéton, un patineur en ligne ou un cycliste est projeté contre la vitre feuilletée. Il s'y ajoute encore le fait que les pare-brise sont habituellement de forme convexe vers l'extérieur. Cette forme assure une rigidité propre relativement élevée de telle manière qu'il ne puisse se produire un bris du verre que sous l'effet de forces plus grandes par comparaison avec des vitres planes ou de forme concave. Etant donné qu'une personne est normalement, en cas d'accident, d'abord touchée aux extrémités inférieures et projetée vers le haut par le pare-chocs ou le capot du moteur, il se produit souvent une collision de la tête contre le pare-brise, ce qui peut provoquer des blessures très graves.

On connaît certes des solutions pour la protection des personnes en cas de collision avec des véhicules, mais celles-ci se rapportent à des mesures consistant à garnir le capot du moteur avec une matière absorbant de l'énergie (DE 100 37 628 A1) ou à soulever le capot du moteur en cas d'accident avec une personne, afin d'influencer favorablement la dynamique du choc (DE 101 32 950 A1). Une mesure concernant indirectement le pare-brise en vue de la protection des personnes est connue par la demande publiée DE 198 03 165 A1, dans laquelle on décrit un dispositif de sécurité pour un véhicule automobile, dans lequel un coussin d'air recouvre, après s'être déployé, un cadre autour du pare-brise sur la face extérieure du véhicule automobile.

L'objet de la présente invention est de proposer une vitre feuilletée pour des véhicules, qui absorbe davantage l'énergie d'un objet heurtant sa surface.

Conformément à l'invention, ce problème est résolu par les caractéristiques de la revendication 1. Les caractéristiques des revendications secondaires présentent des perfectionnements avantageux de cet objet.

La vitre feuilletée est donc un stratifié usuel composé de plusieurs vitres rigides, qui sont assemblées les unes aux autres à l'aide d'une couche intermédiaire indéchirable servant de couche de collage disposée chaque fois entre deux de celles-ci. Au moins une des vitres rigides est constituée de verre, qui est pourvu, conformément à l'invention, d'une ou de plusieurs zones de moindre résistance. Lors d'un bris de vitre à la suite du choc d'un objet contre le stratifié, au moins la vitre de verre se brise mais la couche intermédiaire reste une couche ou une feuille continue. Les zones de moindre résistance sont disposées de telle manière et placées dans la vitre de telle manière que la rupture de la vitre de verre et éventuellement d'autres vitres ne permette pas le passage de l'objet heurté. L'ouverture, qui avait été fermée par la vitre feuilletée, n'est donc pas libérée. Le bris de la vitre de verre et éventuellement d'autres vitres a pour conséquence que la rigidité de la vitre feuilletée est réduite. Si l'objet est un corps humain, ceci entraîne que, lors de sa collision avec la vitre feuilletée, une part importante de l'énergie du choc est absorbée, respectivement dissipée par le bris de la vitre rigide et une déformation élastique ou même plastique consécutive de la couche intermédiaire. Dans certains cas, notamment lorsqu'une des autres vitres se compose de plastique avec une épaisseur relativement faible, cette vitre de plastique peut également absorber de l'énergie par une déformation élastique ou plastique. Après la collision, les vitres individuelles restent encore assemblées les unes aux autres, de telle manière que d'une part l'ouverture du véhicule, dans laquelle la vitre feuilletée est placée, reste fermée et que d'autre part le corps humain soit freiné par la vitre feuilletée rendue plus souple par le bris de la vitre.

Cet effet de filet de retenue est certes déjà observé également avec des vitres feuilletées conventionnelles, mais en l'absence de zones de moindre résistance, l'effet provoqué volontairement avec l'invention y est cependant aléatoire et ne se produit pas dans des zones localement définies. De même, ces vitres feuilletées opposent à la rupture la résistance de la solidité non affaiblie des vitres normales en verre flotté.

Un autre aspect du mode d'action de la vitre feuilletée conforme à l'invention réside aussi dans le fait que son bord reste solidement assemblé au cadre de l'ouverture de montage. La vitre feuilletée ne pénètre pas entièrement dans l'espace intérieur du véhicule, mais elle s'appuie sur ledit cadre pendant la dissipation de l'énergie.

Les zones de moindre résistance précitées sont produites par un affaiblissement de la vitre de verre, par exemple par un rayage mécanique de la vitre de verre. De préférence, l'affaiblissement de la vitre de verre est cependant obtenu par l'application d'un gradient de contraintes localement limité, c'est-à-dire par un état de contraintes hétérogène dans le verre, qui abaisse volontairement, de façon localement limitée, la résistance à la rupture du verre. Le gradient de contraintes est présent aussi bien suivant l'épaisseur du verre que suivant la surface du verre. Pour une charge dans une certaine mesure excessive, due par exemple à une flexion de la vitre de verre, la résistance est dépassée dans la zone du gradient de contraintes et la vitre de verre se brise.

Un état de contraintes hétérogène localement limité peut être produit en appliquant un colorant à cuire et en le cuisant à des températures élevées. Si le coefficient de dilatation du colorant est suffisamment différent de celui de la vitre de verre, des différences de plus de 30 % se sont à cet égard avérées intéressantes, il apparaît au refroidissement de l'ensemble verre-colorant des hétérogénéités de contraintes suffisamment grandes qui conduisent à l'effet désiré. Cette méthode d'obtention du gradient de contraintes est préférée, parce qu'elle implique des frais relativement bas lors de la fabrication. Par ailleurs, des vitres feuilletées pour des véhicules sont fréquemment pourvues d'un cadre imprimé en colorant à cuire, de telle manière que le colorant à cuire pour l'obtention.du gradient de contraintes et le colorant à cuire pour former le cadre imprimé peuvent être appliqués dans des étapes successives et peuvent être ensuite cuits ensemble.

Un gradient de contraintes localement limité peut également être créé par le chauffage local de la vitre de verre au-delà de la température de transformation, suivi d'un refroidissement rapide. Ce procédé est largement répandu pour la trempe thermique ; toutefois, dans les procédés connus, la vitre entière est chauffée et trempée de façon homogène. Un chauffage local peut être effectué par exemple à l'aide d'un laser ou d'une flamme de gaz.

Pour assurer que la vitre de verre brisée ne traverse pas la couche intermédiaire après le bris de la vitre, et donc que le stratifié ferme encore l'ouverture, les zones de moindre résistance sont disposées en forme de grille avec un décalage les unes par rapport aux autres. De ce fait, on évite la rupture de la vitre le long d'une ligne allongée, qui pourrait former une arête vive et percer la couche intermédiaire. La distance entre les zones de moindre résistance individuelles et la grandeur des zones de moindre résistance peut, selon la nature et la forme de leur disposition, valoir entre 0,1 mm et 200 mm.

Si les zones de moindre résistance sont disposées dans la région du bord de la vitre feuilletée, des perturbations visuelles éventuellement produites, qui découlent de la création du gradient de contraintes ou des propriétés optiques différentes des régions avec et sans contraintes internes, sont à peine perceptibles parce qu'elles se situent hors de la zone de visibilité principale. En cas de besoin, des zones de moindre résistance situées dans la région du bord peuvent sans grands frais être masquées par la couche colorée en forme de cadre, dont les vitres automobiles sont souvent pourvues.

De préférence, les zones de moindre résistance sont placées sur la surface de la vitre de verre tournée vers l'espace intérieur. Etant donné que la cambrure de la vitre feuilletée est orientée vers l'extérieur, un effet dynamique provenant de l'espace intérieur du véhicule ne peut pas occasionner le bris de la vitre de verre, car celui-ci produit une contrainte de compression près de la surface sur la surface de la vitre de verre tournée vers l'espace intérieur. De façon connue, des contraintes de compression peuvent cependant être bien supportées par le verre. Sous une charge venant de l'intérieur, la vitre feuilletée conforme à l'invention ne se comporte donc guère différemment d'une vitre feuilletée usuelle. Toutefois, au cas où l'effet dynamique se produit par l'extérieur, il se produit sur la surface de la vitre de verre tournée vers l'espace intérieur des contraintes de traction proches de la surface, qui conduisent au bris de la vitre de verre en raison de l'affaiblissement par les zones de moindre résistance. Toutefois, les hétérogénéités de contraintes doivent être dosées de telle façon que les forces agissant sur la vitre feuilletée montée (en particulier collée), pendant le fonctionnement normal, par exemple par des déformations de la carrosserie, ne puissent pas conduire à sa rupture.

La vitre feuilletée conforme à l'invention se compose d'une vitre de verre et d'une ou de plusieurs vitres de verre ou de plastique. Les vitres individuelles sont assemblées les unes aux autres à l'aide de couches intermédiaires indéchirables. La couche intermédiaire peut être par exemple un film adhésif en polyvinyl butyral ou en polyuréthanne. La couche intermédiaire elle-même peut être réalisée sous la forme d'un stratifié composé d'une couche fonctionnelle et d'une couche adhésive.

## Revendications

1. Vitre feuilletée avec au moins une zone de moindre résistance, destinée à fermer une ouverture de véhicule, se composant d'au moins une vitre de verre et d'au moins une autre vitre et d'une couche intermédiaire assemblant les vitres individuelles les unes aux autres, **caractérisée en ce que** la vitre de verre est pourvue de plusieurs zones de moindre résistance disposées avec un décalage les unes par rapport aux autres, à la manière d'une grille de manière à éviter la rupture le long d'une ligne allongée, et **en ce que**, lors du choc d'un objet contre la vitre feuilletée, la vitre de verre se brise auxdites plusieurs zones de moindre résistance mais que l'ouverture du véhicule reste cependant encore fermée au moins par la couche intermédiaire déformée de la vitre feuilletée.

2. Vitre feuilletée suivant la revendication 1, **caractérisée en ce que** les zones de moindre résistance sont des états de contraintes hétérogènes localement limités créés dans la vitre de verre.

3. Vitre feuilletée suivant la revendication 2, **caractérisée en ce que** les états de contraintes hétérogènes sont obtenus par l'impression et ensuite la cuisson d'un colorant à cuire.

4. Vitre feuilletée suivant la revendication 2, **caractérisée en ce que** les états de contraintes hétérogènes sont créés par une trempe thermique locale.

5. Vitre feuilletée suivant la revendication 4, **caractérisée en ce que** la trempe thermique est réalisée au moyen d'un chauffage local avec une flamme de gaz suivi d'un refroidissement brusque.

6. Vitre feuilletée suivant la revendication 4, **caractérisée en ce que** la trempe thermique locale est réalisée au moyen d'un chauffage local avec un laser suivi d'un refroidissement brusque.

7. Vitre feuilletée suivant l'une quelconque des revendications précédentes, **caractérisée en ce que** les zones de moindre résistance sont disposées dans la région du bord de la vitre feuilletée.

8. Vitre feuilletée suivant l'une quelconque des revendications précédentes, **caractérisée en ce que** les autres vitres sont également constituées de verre.

9. Vitre feuilletée suivant la revendication 9, **caractérisée en ce que** des zones de moindre résistance sont également créées dans au moins une autre vitre de verre.

10. Vitre feuilletée suivant l'une quelconque des revendications précédentes, **caractérisée en ce que** la couche intermédiaire assemblant les vitres individuelles les unes aux autres est un film adhésif thermoplastique.

11. Vitre feuilletée suivant l'une quelconque des revendications précédentes, **caractérisée en ce que** les zones de moindre résistance sont disposées sur la face de la vitre de verre, qui est à l'opposé de la face recevant le choc de l'objet.

12. Utilisation d'une vitre feuilletée suivant l'une quelconque des revendications précédentes, comme pare-brise ou comme vitre de toit dans un véhicule.

## Patentansprüche

1. Verbundscheibe mit mindestens einer Zone geringeren Widerstandes zum Verschließen einer Fahrzeugöffnung, die aus mindestens einer Glasscheibe und mindestens einer weiteren Scheibe und einer Zwischenschicht besteht, welche die einzelnen Scheiben miteinander verbindet, **dadurch gekennzeichnet, dass** die Glasscheibe mit mehreren Zonen geringeren Widerstandes versehen ist, die mit einem Versatz relativ zueinander angeordnet sind wie ein Gitter, um das Brechen entlang einer langgezogenen Linie zu vermeiden, und dass bei einem Aufprall eines Objekts gegen die Verbundscheibe die Glasscheibe an den mehreren Zonen geringeren Widerstandes zerbricht, die Öffnung des Fahrzeugs jedoch mindestens durch die verformte Zwischenschicht der Verbundscheibe noch verschlossen bleibt.

2. Verbundscheibe nach Anspruch 1, **dadurch gekennzeichnet, dass** die Zonen geringeren Widerstandes lokal begrenzte heterogene Spannungszustände sind, die in der Glasscheibe erzeugt sind.

3. Verbundscheibe nach Anspruch 2, **dadurch gekennzeichnet, dass** die heterogenen Spannungszustände durch Bedrucken und anschließend durch Brennen eines Brenn-Farbstoffs erhalten werden.

4. Verbundscheibe nach Anspruch 2, **dadurch gekennzeichnet, dass** die heterogenen Spannungszustände durch ein lokales thermisches Vorspannen erzeugt werden.

5. Verbundscheibe nach Anspruch 4, **dadurch gekennzeichnet, dass** das thermische Vorspannen mittels eines lokalen Aufheizens mit einer Gasflamme gefolgt von einem abrupten Abkühlen realisiert wird.

6. Verbundscheibe nach Anspruch 4, **dadurch gekennzeichnet, dass** das lokale thermische Vorspannen mittels eines lokalen Aufheizens mit einem Laser gefolgt von einem abrupten Abkühlen realisiert wird.

7. Verbundscheibe nach einem der vorhergehenden Ansprüche, **dadurch gekennzeichnet, dass** die Zonen geringeren Widerstandes in der Region des Randes der Verbundscheibe angeordnet sind.

8. Verbundscheibe nach einem der vorhergehenden Ansprüche, **dadurch gekennzeichnet, dass** die weiteren Scheiben auch aus Glas bestehen.

9. Verbundscheibe nach Anspruch 9, **dadurch gekennzeichnet, dass** Zonen geringeren Widerstandes auch in mindestens einer weiteren Glasscheibe erzeugt werden.

10. Verbundscheibe nach einem der vorhergehenden Ansprüche, **dadurch gekennzeichnet, dass** die Zwischenschicht, welche die einzelnen Scheiben miteinander verbindet, eine thermoplastische Klebefolie ist.

11. Verbundscheibe nach einem der vorhergehenden Ansprüche, **dadurch gekennzeichnet, dass** die Zonen geringeren Widerstandes auf der Seite der Glasscheibe angeordnet sind, die der Seite, welche den Aufprall des Objekts aufnimmt, entgegengesetzt ist.

12. Verwendung einer Verbundscheibe nach einem der vorhergehenden Ansprüche als Windschutzscheibe oder als Dachscheibe in einem Fahrzeug.

## Claims

1. Composite pane having at least one weak point for closing a vehicle opening, comprising at least one glass pane and at least one further pane, and an intermediate layer which connects the individual panes to one another, **characterized in that** the glass pane is provided with one or more weak points arranged offset with respect to one another, like a grid so as to avoid breakage along an elongated line, and **in that**, in the event of an object striking the composite pane, the glass pane breaks at the said one or more weak points, but the vehicle opening still remains closed at least by the deforming intermediate layer of the composite pane.

2. Composite pane according to Claim 1, **characterized in that** the weak points are locally limited inhomogeneous stress states introduced into the glass pane.

3. Composite pane according to Claim 2, **characterized in that** the inhomogeneous stress states are achieved by printing and then baking a bake-on colorant.

4. Composite pane according to Claim 2, **characterized in that** the inhomogeneous stress states are produced by local thermal prestressing.

5. Composite pane according to Claim 4, **characterized in that** the thermal prestressing is produced by means of local heating with a gas flame followed by sudden cooling down.

6. Composite pane according to Claim 4, **characterized in that** the local thermal prestressing is produced by means of local heating with a laser, followed by sudden cooling down.

7. Composite pane according to one of the preceding claims, **characterized in that** the weak points are arranged in the edge area of the composite pane.

8. Composite pane according to one of the preceding claims, **characterized in that** the further panes are likewise composed of glass.

9. Composite pane according to Claim 9, **characterized in that** weak points are likewise introduced into at least one further glass pane.

10. Composite pane according to one of the preceding claims, **characterized in that** the intermediate layer which connects the individual panes to one another is a thermoplastic adhesive sheet.

11. Composite pane according to one of the preceding claims, **characterized in that** the weak points are arranged on that side of the glass pane which faces away from the side on which the object strikes.

12. Use of a composite pane according to one of the preceding claims as a windscreen or roof pane in a vehicle.
